(19) Europäisches Patentamt
European Patent Office
Office européen des brevets

(11) EP 3 950 739 B1

(12) # EUROPEAN PATENT SPECIFICATION

(45) Date of publication and mention of the grant of the patent:
**08.11.2023 Bulletin 2023/45**

(21) Application number: **20189499.5**

(22) Date of filing: **05.08.2020**

(51) International Patent Classification (IPC):
***C08F 210/06*** *(2006.01)* ***C08L 23/14*** *(2006.01)*

(52) Cooperative Patent Classification (CPC):
(C-Sets available)
**C08F 210/06; C08L 23/142;** C08F 4/65908; C08F 4/65912; C08F 4/65916; C08L 2203/16; C08L 2205/025 (Cont.)

(54) **POLYPROPYLENE SHEET**

POLYPROPYLENFOLIE

FEUILLE DE POLYPROPYLÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.02.2022 Bulletin 2022/06**

(73) Proprietor: **Borealis AG**
**1020 Vienna (AT)**

(72) Inventors:
- **WANG, Jingbo**
  **4021 Linz (AT)**
- **GAHLEITNER, Markus**
  **4021 Linz (AT)**
- **BERNREITNER, Klaus**
  **4021 Linz (AT)**
- **LESKINEN, Pauli**
  **06101 Porvoo (FI)**
- **VAHTERI, Markku**
  **06101 Porvoo (FI)**
- **ZACH, Markus**
  **4021 Linz (AT)**

(74) Representative: **Maiwald GmbH**
**Elisenhof**
**Elisenstraße 3**
**80335 München (DE)**

(56) References cited:
**EP-A1- 3 456 776** **WO-A1-2009/077287**
**WO-A1-2017/097578**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 210/06, C08F 4/6492;**
**C08F 210/06, C08F 4/65927;**
**C08L 23/142, C08L 23/142;**
C08F 210/06, C08F 210/14, C08F 2500/03,
C08F 2500/12, C08F 2500/27, C08F 2500/26,
C08F 2500/33, C08F 2500/34, C08F 2500/35

## Description

The present invention is related to a polypropylene sheet, especially suitable for thermoforming, showing an advantageous combination of optical properties and mechanical properties.

Polymers are widely used in daily life, including polypropylene (PP), polyethylene (PE), polystyrene (PS) etc., but while the human society enjoys the convenience of the plastic products, a lot of waste is created. This generates some pressures on the society to find a sustainable solution. Obviously too much diversity of the materials will lead to a mixture of plastic waste, create troubles for reuse and recycling. PS is widely used in thermoforming (TF) applications for cups and trays, however, it is known that PS is not miscible with PP and PE, therefore replacing PS with PP to reduce the diversity makes sense. Moreover, the PS has bad mechanical properties and the monomer alone has some HSE (health - safety - economy) pressure. Therefore it will be useful to have a solution with an advantageous combination of optics, stiffness, and impact.

There are currently mainly three types of polypropylenes available for the market segment thermoforming (e.g. for food packaging): polypropylene homopolymers, polypropylene random copolymers and heterophasic propylene copolymers.

Propylene homopolymers are characterized by their higher stiffness, especially when they are $\alpha$-nucleated. The disadvantage of polypropylene homopolymers is their low impact strength, which leads to restrictions regarding the temperature range of application. Polypropylene random copolymers are characterized by good optical properties, especially high transparency, but also by low stiffness and low impact strength at low temperatures. Heterophasic propylene copolymers have a better impact strength over a wide temperature range, but usually heterophasic copolymers have low transparency, i.e. high haze and low clarity.

Several patents in this field have already been filed.

For Example, EP 2582732 claims a nucleated, thermoformed article comprising a propylene homopolymer comprising a substituted 1,2-phenylene dibenzoate selected from the group consisting of 3-methyl-5-tert-butyl-1,2-phenylene dibenzoate and 3,5-diisopropyl-1,2-phenylene dibenzoate; the thermoformed article having a haze value from 1% to 10% as measured in accordance with ASTM D 1003. The PP itself is specified in the claims as being a propylene homopolymer having a polydispersity index greater than 5.0 to 10.0, which is typical for a mono- or bimodal Ziegler Natta (ZN) catalysed grade. The patent is silent in view of clarity and dart drop impact, and additionally PP with such high polydispersity is known to cause stability problems in film or sheet processing.

WO 2004/055101 discloses a heterophasic polypropylene composition, in particular, suitable for the formation of flat films for thermoforming. In order to improve the transparency of the heterophasic polypropylene composition, the use of an $\alpha$-nucleating agent selected, in particular, from low molecular weight compounds such as phosphate salt-derived nucleating agents and sorbitol-derived nucleating agents is proposed. Other suitable nucleating agents disclosed in the above-mentioned international patent application are metallic salts of aromatic carboxylic acids and metallic salts of aliphatic carboxylic acids, inorganic compounds such as talc, as well as vinyl cyclohexane polymers. While the achieved haze is clearly better than for normal heterophasic copolymers, the transparency is still not sufficient for replacing e.g. polystyrene.

In order to avoid the use of the expensive **low** molecular weight nucleating agents, such as sorbitol-derived nucleating agents, without sacrificing the demands with respect to transparency, EP 1801156 proposes to add a low density ethylene copolymer to the heterophasic polypropylene composition. In addition a polymeric nucleating agent is added. Said compositions are suitable for thermoforming and thin wall packaging and have good transparency. The example compositions are shown to have improved ductility, but the haze level is still rather unsatisfactory.

EP 3 456 776 discloses a polypropylene composition comprising a blend of (A) 85.0 to 95.0 wt% of a heterophasic propylene copolymer (HECO) comprising (A-1) 80.0 to 90.0 wt% of a matrix (M) being a propylene homopolymer (H-PP) with an $MFR_2$ (230°C) of from 0.8-10.0 g/10min and (A-2) 10.0 to 20.0 wt% of an elastomeric propylene copolymer (EPC) dispersed in said matrix (M), said heterophasic propylene copolymer having with a $C_2$ content of the xylene cold soluble (XCS) fraction of from 15.0 to 30.0 wt% and an intrinsic viscosity (iV; determined according to DIN ISO 1628/1 in decalin at 135°C) of the XCS fraction of from 1.2 to 2.6 dl/g; (B) 5.0 to 15.0 wt% of a propylene-hexene random copolymer with a hexene content in the range of from 2.0 to 10.0 wt% and an $MFR_2$ (230°C) in a range of from 1.0 to 20.0 g/10 min and (C) optionally an $\alpha$-nucleating agent.

Although a lot of development work has been done in that field, there is still a need for further improvement and thus for designing materials which lead to an improved and advantageous combination of beneficial optical properties, like low haze and high clarity, and high stiffness and impact.

The present invention is based on the finding that the above discussed needs for thermoforming applications can be achieved by a specific design of a metallocene catalysed polypropylene random copolymer.

## Summary of the Invention

Thus, the present invention is related to a polypropylene sheet comprising at least 90.0 wt.-% of a metallocene catalysed propylene-$C_4$-$C_{12}$-$\alpha$-olefin random copolymer with

a-1) a $C_4$-$C_{12}$-$\alpha$-olefin content in the range of from 1.0 to 6.0 wt.-%, based on the total weight of the propylene-$C_4$-$C_{12}$-$\alpha$-olefin random copolymer,
a-2) an $MFR_2$ (230°C, 2.16kg, ISO1133) in a range of from 2.0 to 20.0 g/10 min,
a-3) a melting temperature Tm (DSC) in the range of from 125°C to 150°C, and
a-4) a xylene cold soluble (XCS) amount in the range of 0.3 to 2.5 wt.-% (measured according to ISO 16152, 2005, at 25°C) and

wherein the sheet has a thickness of 100 to 1000 $\mu$m.

It has surprisingly been found, that such sheets have an optimized or improved balance between optical properties, stiffness and toughness, i.e. dart drop impact.

The following preferable embodiments, properties and subgroups of the propylene-$C_2$-$C_{12}$-$\alpha$-olefin random copolymer and the sheet of the invention including the preferable ranges thereof, are independently generalizable so that they can be used in any order or combination to further define the preferable embodiments of the propylene-$C_2$-$C_{12}$-$\alpha$-olefin random copolymer and the sheet of the invention.

## Detailed description

### *propylene-$C_4$-$C_{12}$-$\alpha$-olefin random copolymer*

The comonomer of the propylene-$C_4$-$C_{12}$-$\alpha$-olefin random copolymer is selected from the group of $C_4$-$C_{12}$-$\alpha$-olefins, preferably from $C_4$-$C_{10}$-$\alpha$-olefins, more preferably from $C_4$-$C_8$-$\alpha$-olefins, especially from the group consisting of 1-butene ($C_4$) and 1-hexene ($C_6$). Even more preferably the comonomer is 1-hexene.

The propylene-$C_4$-$C_{12}$-$\alpha$-olefin random copolymer has a comonomer content in the range of from 1.0 to 6.0 wt.-%, preferably in the range of from 1.5 to 5.0 wt.-%, more preferably in the range of from 1.8 to 4.5 wt.-%, yet more preferably in the range of from 2.0 to 4.2 wt.-%, and even more preferably in the range of from 2.4 to 4.0 wt.-%; based on the total weight of the propylene-$C_4$-$C_{12}$-$\alpha$-olefin random copolymer.

The $MFR_2$ (230°C, 2.16kg, ISO1133) of the propylene-$C_4$-$C_{12}$-$\alpha$-olefin random copolymer is in the range of from 1.0 to 20.0 g/10 min, preferably in the range of from 1.5 to 15.0 g/10 min, more preferably in the range of from 2.0 to 12.0 g/10 min, yet more preferably in the range of from 3.0 to 10.0 g/10 min and even more preferably in the range of from 4.0 to 8.0 g/10 min.

The melting temperature Tm of the propylene-$C_4$-$C_{12}$-$\alpha$-olefin random copolymer is in the range of from 125°C to 150°C, preferably in the range of from 128°C to 145°C, and more preferably in the range of from 130°C to 143°C.

The propylene-$C_4$-$C_{12}$-$\alpha$-olefin random copolymer furthermore has a xylene cold soluble (XCS) amount (measured according to ISO 16152, 2005, at 25°C) in the range of 0.3 to 2.5 wt.-%, preferably in the range of 0.4 to 2.0 wt.-%, more preferably in the range of 0.5 to 1.8 wt.-%.

The propylene-$C_4$-$C_{12}$-$\alpha$-olefin random copolymer furthermore may have a crystallisation temperature Tc in the range of from 90°C to 105°C, preferably from 92°C to 103°C.

Additionally the propylene-$C_4$-$C_{12}$-$\alpha$-olefin random copolymer may have a Mw/Mn value, representing the broadness of the molecular weight distribution (MWD), measured with GPC, in the range of from 1.5 to 5.0, preferably in the range of from 2.0 to 4.5, and more preferably in the range of from 2.5 to 4.0.

The propylene-$C_4$-$C_{12}$-$\alpha$-olefin random copolymer as described above is obtained in the presence of a metallocene catalyst.

Thus, the term metallocene catalysed propylene-$C_4$-$C_{12}$-$\alpha$-olefin random copolymer means that the polymer is produced in the presence of a metallocene catalyst.

The metallocene catalyst can be a supported catalyst, using conventional supports or can be free from an external carrier. By free from an external carrier is meant that the catalyst does not contain an external support, such as an inorganic support, for example, silica or alumina, or an organic polymeric support material

Preferably the metallocene catalyst comprises (i) a complex of formula (I):

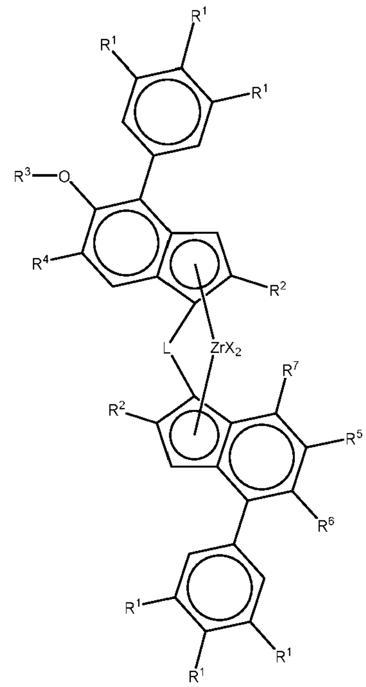

each X independently is a sigma-donor ligand,
L is a divalent bridge selected from $-R'_2C-$, $-R'_2C-CR'_2-$, $-R'_2Si-$, $-R'_2Si-SiR'_2-$, $-R'_2Ge-$, wherein each R' is independently a hydrogen atom or a $C_1$-$C_{20}$-hydrocarbyl group optionally containing one or more heteroatoms of Group 14-16 of the periodic table or fluorine atoms, or optionally two R' groups taken together can form a ring,
each $R^1$ are independently the same or can be different and are hydrogen, a linear or branched $C_1$-$C_6$-alkyl group, a $C_{7-20}$ arylalkyl, $C_{7-20}$ alkylaryl group or $C_{6-20}$ aryl group or an OY group, wherein Y is a $C_{1-10}$ hydrocarbyl group, and optionally two adjacent $R^1$ groups can be part of a ring including the phenyl carbons to which they are bonded,
each $R^2$ independently are the same or can be different and are a $CH_2$-$R^8$ group, with $R^8$ being H or linear or branched $C_{1-6}$-alkyl group, $C_{3-8}$ cycloalkyl group, $C_{6-10}$ aryl group,
$R^3$ is a linear or branched $C_1$-$C_6$-alkyl group, $C_{7-20}$ arylalkyl, $C_{7-20}$ alkylaryl group or $C_6$-$C_{20}$-aryl group,
$R^4$ is a $C(R^9)_3$ group, with $R^9$ being a linear or branched $C_1$-$C_6$ alkyl group,
$R^5$ is hydrogen or an aliphatic $C_1$-$C_{20}$ hydrocarbyl group optionally containing one or more heteroatoms from groups 14-16 of the periodic table of elements;
$R^6$ is hydrogen or an aliphatic $C_1$-$C_{20}$ hydrocarbyl group optionally containing one or more heteroatoms from groups 14-16 of the periodic table of elements; or
$R^5$ and $R^6$ can be taken together to form a 5 membered saturated carbon ring which is optionally substituted by n groups $R^{10}$, n being from 0 to 4;
each $R^{10}$ is same or different and may be a $C_1$-$C_{20}$ hydrocarbyl group, or a $C_1$-$C_{20}$ hydrocarbyl radical optionally containing one or more heteroatoms belonging to groups 14-16 of the periodic table of elements;
$R^7$ is H or a linear or branched $C_1$-$C_6$-alkyl group or an aryl or heteroaryl group having 6 to 20 carbon atoms optionally substituted by one to 3 groups $R^1$,
(ii) a cocatalyst system comprising a boron containing cocatalyst and/or an aluminoxane cocatalyst and
(iii) optionally a silica support.

Each X independently is a sigma-donor ligand, thus each X may be the same or different, and is preferably a hydrogen atom, a halogen atom, a linear or branched, cyclic or acyclic $C_{1-20}$-alkyl or -alkoxy group, a $C_{6-20}$-aryl group, a $C_{7-20}$-alkylaryl group or a $C_{7-20}$-arylalkyl group; optionally containing one or more heteroatoms of Group 14-16 of the periodic table.

The term "$C_{1-20}$ hydrocarbyl group" includes $C_{1-20}$-alkyl, $C_{2-20}$-alkenyl, $C_{2-20}$-alkynyl, $C_{3-20}$-cycloalkyl, $C_{3-20}$-cycloalkenyl, $C_{6-20}$-aryl groups, $C_{7-20}$-alkylaryl groups or $C_{7-20}$-arylalkyl groups or of course mixtures of these groups such as cycloalkyl substituted by alkyl. Linear and branched hydrocarbyl groups cannot contain cyclic units. Aliphatic hydrocarbyl groups cannot contain aryl rings.

Unless otherwise stated, preferred $C_{1-20}$ hydrocarbyl groups are $C_{1-20}$ alkyl, $C_{4-20}$ cycloalkyl, $C_{5-20}$ cycloalkyl-alkyl groups, $C_{7-20}$ alkylaryl groups, $C_{7-20}$ arylalkyl groups or $C_{6-20}$ aryl groups, especially $C_{1-10}$ alkyl groups, $C_{6-10}$ aryl groups, or $C_{7-12}$ arylalkyl groups, e.g. $C_{1-8}$ alkyl groups. Most especially preferred hydrocarbyl groups are methyl, ethyl,

propyl, isopropyl, tert-butyl, isobutyl, $C_{5-6}$-cycloalkyl, cyclohexylmethyl, phenyl or benzyl.

The term "halo" includes fluoro, chloro, bromo and iodo groups, especially chloro or fluoro groups, when relating to the complex definition.

Any group including "one or more heteroatoms belonging to groups 14-16 of the periodic table of elements " preferably means O, S or N. N groups may present as -NH- or -NR"-where R" is $C_1$-$C_{10}$ alkyl. There may, for example, be 1 to 4 heteroatoms. The group including one or more heteroatoms belonging to groups 14-16 of the periodic table of elements may also be an alkoxy group, e.g. a $C_1$-$C_{10}$-alkoxy group.

Preferred complexes for the preparation of the propylene-$C_4$-$C_{12}$-$\alpha$-olefin random copolymer are for example described in WO 2019179959.

More preferred complexes are of formula (II)

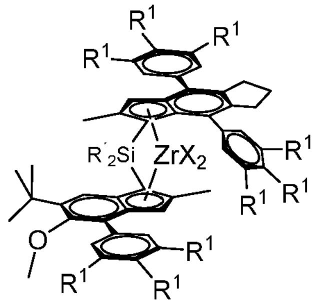

wherein each $R^1$ are independently the same or can be different and are hydrogen or a linear or branched $C_1$-$C_6$-alkyl group, whereby at least on $R^1$ per phenyl group is not hydrogen,
R' is a $C_{1-10}$ hydrocarbyl group, preferably a $C_{1-4}$ hydrocarbyl group and more preferably a methyl group and
X independently is a hydrogen atom, a halogen atom, $C_{1-6}$ alkoxy group, $C_{1-6}$ alkyl group, phenyl or benzyl group.

Most preferably, X is chlorine, benzyl or a methyl group. Preferably, both X groups are the same. The most preferred options are two chlorides, two methyl or two benzyl groups, especially two chlorides.

Specific preferred metallocene catalyst complexes of the invention include:

rac-anti-dimethylsilanediyl[2-methyl-4,8-bis-(4'-tert-butylphenyl)-1,5,6,7-tetrahydro-s-indacen-1-yl][2-methyl-4-(3',5'-dimethyl-phenyl)-5-methoxy-6-tert-butylinden-1-yl] zirconium dichloride
rac-anti-dimethylsilanediyl[2-methyl-4,8-bis-(3',5'-dimethylphenyl)-1,5,6,7-tetrahydro-s indacen-1-yl] [2-methyl-4-(3',5'-dimethylphenyl)-5-methoxy-6-tert-butylinden-1-yl] zirconium dichloride
rac-anti-dimethylsilanediyl[2-methyl-4,8-bis-(3',5'-dimethylphenyl)-1,5,6,7-tetrahydro-s-indacen-1-yl][2-methyl-4-(3',5'-ditert-butyl-phenyl)-5-methoxy-6-tert-butylinden-1-yl] zirconium dichloride
or their corresponding zirconium dimethyl analogues.

The ligands required to form the complexes and hence catalysts of the invention can be synthesised by any process and the skilled organic chemist would be able to devise various synthetic protocols for the manufacture of the necessary ligand materials. For Example WO2007/116034 discloses the necessary chemistry. Synthetic protocols can also generally be found in WO2002/02576, WO2011/135004, WO2012/084961, WO2012/001052, WO2011/076780, WO2015/158790 and WO2018/122134. The examples section also provides the skilled person with sufficient direction.

*Cocatalyst*

To form an active catalytic species it is normally necessary to employ a cocatalyst as is well known in the art.

According to the present invention a cocatalyst system comprising a boron containing cocatalyst and/or an aluminoxane cocatalyst is used in combination with the above defined metallocene catalyst complex.

The aluminoxane cocatalyst can be one of formula (III):

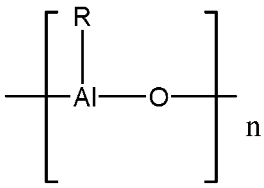

(III)

where n is usually from 6 to 20 and R has the meaning below.

Aluminoxanes are formed on partial hydrolysis of organoaluminum compounds, for example those of the formula $AlR_3$, $AlR_2Y$ and $Al_2R_3Y_3$ where R can be, for example, $C_1$-$C_{10}$ alkyl, preferably $C_1$-$C_5$ alkyl, or $C_3$-$_{10}$ cycloalkyl, $C_7$-$C_{12}$ arylalkyl or alkylaryl and/or phenyl or naphthyl, and where Y can be hydrogen, halogen, preferably chlorine or bromine, or C1-C10 alkoxy, preferably methoxy or ethoxy. The resulting oxygen-containing aluminoxanes are not in general pure compounds but mixtures of oligomers of the formula (III).

The preferred aluminoxane is methylaluminoxane (MAO). Since the aluminoxanes used according to the invention as cocatalysts are not, owing to their mode of preparation, pure compounds, the molarity of aluminoxane solutions hereinafter is based on their aluminium content.

According to the present invention, also a boron containing cocatalyst can be used instead of the aluminoxane cocatalyst or the aluminoxane cocatalyst can be used in combination with a boron containing cocatalyst.

It will be appreciated by the skilled man that where boron based cocatalysts are employed, it is normal to prealkylate the complex by reaction thereof with an aluminium alkyl compound, such as TIBA. This procedure is well known and any suitable aluminium alkyl, e.g. $Al(C_{1-6}\text{-alkyl})_3$. can be used. Preferred aluminium alkyl compounds are triethylaluminium, triisobutylaluminium, tri-isohexylaluminium, tri-n-octylaluminium and tri-isooctylaluminium. Alternatively, when a borate cocatalyst is used, the metallocene catalyst complex is in its alkylated version, that is for example a dimethyl or dibenzyl metallocene catalyst complex can be used.

Boron based cocatalysts of interest include those of formula (IV)

$BY_3$ (IV)

wherein Y is the same or different and is a hydrogen atom, an alkyl group of from 1 to about 20 carbon atoms, an aryl group of from 6 to about 15 carbon atoms, alkylaryl, arylalkyl, haloalkyl or haloaryl each having from 1 to 10 carbon atoms in the alkyl radical and from 6-20 carbon atoms in the aryl radical or fluorine, chlorine, bromine or iodine. Preferred examples for Y are methyl, propyl, isopropyl, isobutyl or trifluoromethyl, unsaturated groups such as aryl or haloaryl like phenyl, tolyl, benzyl groups, p-fluorophenyl, 3,5- difluorophenyl, pentachlorophenyl, pentafluorophenyl, 3,4,5-trifluorophenyl and 3,5-di(trifluoromethyl)phenyl. Preferred options are trifluoroborane, triphenylborane, tris(4-fluorophenyl)borane, tris(3,5-difluorophenyl)borane, tris(4-fluoromethylphenyl)borane, tris(2,4,6-trifluorophenyl)borane, tris(penta-fluorophenyl)borane, tris(tolyl)borane, tris(3,5-dimethyl-phenyl)borane, tris(3,5-difluorophenyl)borane and/or tris (3,4,5-trifluorophenyl)borane.

Particular preference is given to tris(pentafluorophenyl)borane.

However it is preferred that borates are used, i.e. compounds containing a borate 3+ ion. Such ionic cocatalysts preferably contain a non-coordinating anion such as tetrakis(pentafluorophenyl)borate and tetraphenylborate. Suitable counterions are protonated amine or aniline derivatives such as methylammonium, anilinium, dimethylammonium, diethylammonium, N- methylanilinium, diphenylammonium, N,N-dimethylanilinium, trimethylammonium, triethylammonium, tri-n-butylammonium, methyldiphenylammonium, pyridinium, p-bromo-N,N- dimethylanilinium or p-nitro-N,N-dimethylanilinium.

Preferred ionic compounds which can be used according to the present invention include: triethylammoniumtetra(phenyl)borate, tributylammoniumtetra(phenyl)borate, trimethylammoniumtetra(tolyl)borate, tributylammoniumtetra(tolyl)borate, tributylammoniumtetra(pentafluorophenyl)borate, tripropylammoniumtetra(dimethylphenyl)borate, tributylammoniumtetra(trifluoromethylphenyl)borate, tributylammoniumtetra(4-fluorophenyl)borate, N,N-dimethylcyclohexylammoniumtetrakis(pentafluorophenyl)borate, N,N-dimethylbenzylammoniumtetrakis(pentafluorophenyl)borate, N,N-dimethylaniliniumtetra(phenyl)borate, N,N-diethylaniliniumtetra(phenyl)borate, N,N-dimethylaniliniumtetrakis(pentafluorophenyl)borate, N, N-di(propyl)ammoniumtetrakis(pentafluorophenyl)borate, di(cyclohexyl)ammoniumtetrakist(pentafluorophenyl) borate, triphenylphosphoniumtetrakis(phenyl)borate, triethylphosphoniumtetrakis(phenyl)borate, diphenylphosphoniumtetrakis(phenyl)borate, tri(methylphenyl)phosphoniumtetrakis(phenyl)borate, tri(dimethylphenyl)phosphoniumtetrakis(phenyl)borate, triphenylcarbeniumtetrakis(pentafluorophenyl)borate, or ferroceniumtetrakis(pentafluorophenyl)borate.

Preference is given to triphenylcarbeniumtetrakis(pentafluorophenyl) borate, N,N- dimethylcyclohexylammoniumtetrakis(pentafluorophenyl)borate or N,N- dimethylbenzylammoniumtetrakis(pentafluorophenyl)borate.

It has been surprisingly found that certain boron cocatalysts are especially preferred. Preferred borates of use in the invention therefore comprise the trityl ion. Thus the use of N,N-dimethylammonium-tetrakispentafluorophenylborate and $Ph_3CB(PhF_5)_4$ and analogues therefore are especially favoured.

According to the present invention, the preferred cocatalysts are alumoxanes, more preferably methylalumoxanes, combinations of alumoxanes with Al-alkyls, boron or borate cocatalysts, and combination of alumoxanes with boron-based cocatalysts.

Suitable amounts of cocatalyst will be well known to the skilled man.

The molar ratio of boron to the metal ion of the metallocene may be in the range 0.5:1 to 10:1 mol/mol, preferably 1:1 to 10:1, especially 1:1 to 5:1 mol/mol.

The molar ratio of Al in the aluminoxane to the metal ion of the metallocene may be in the range 1:1 to 2000:1 mol/mol, preferably 10:1 to 1000:1, and more preferably 50:1 to 500:1 mol/mol.

The catalyst can be used in supported or unsupported form, preferably in supported form. The particulate support material used is preferably an organic or inorganic material, such as silica, alumina or zirconia or a mixed oxide such as silica-alumina, in particular silica, alumina or silica-alumina. The use of a silica support is preferred. The skilled person is aware of the procedures required to support a metallocene catalyst.

Especially preferably, the support is a porous material so that the complex may be loaded into the pores of the support, e.g. using a process analogous to those described in WO94/14856 (Mobil), WO95/12622 (Borealis) and WO2006/097497.

The average particle size of the silica support can be typically from 10 to 100 $\mu$m. However, it has turned out that special advantages can be obtained if the support has an average particle size from 15 to 80 $\mu$m, preferably from 18 to 50 $\mu$m.

The average pore size of the silica support can be in the range 10 to 100 nm and the pore volume from 1 to 3 mL/g.

Examples of suitable support materials are, for instance, ES757 produced and marketed by PQ Corporation, Sylopol 948 produced and marketed by Grace or SUNSPERA DM-L-303 silica produced by AGC Si-Tech Co. Supports can be optionally calcined prior to the use in catalyst preparation in order to reach optimal silanol group content.

The use of these supports is routine in the art.

The propylene-$C_4$-$C_{12}$-$\alpha$-olefin random copolymer can be produced in a single polymerization step comprising a single polymerization reactor (R1) or in a sequential polymerization process comprising at least two polymerization reactors (R1) and (R2), whereby in the first polymerization reactor (R1) a first propylene copolymer fraction (R-PP1) is produced, which is subsequently transferred into the second polymerization reactor (R2). In the second polymerization reactor (R2) a second propylene copolymer fraction (R-PP2) is produced in the presence of the first propylene copolymer fraction (R-PP1).

Polymerization processes which are suitable for producing the propylene-$C_4$-$C_{12}$-$\alpha$-olefin random copolymer generally comprises at one or two polymerization stages and each stage can be carried out in solution, slurry, fluidized bed, bulk or gas phase.

The term "polymerization reactor" shall indicate that the main polymerization takes place. Thus in case the process consists of one or two polymerization reactors, this definition does not exclude the option that the overall system comprises for instance a pre-polymerization step in a pre-polymerization reactor. The term "consist of" is only a closing formulation in view of the main polymerization reactors.

The term "sequential polymerization process" indicates that the propylene-$C_2$-$C_{12}$-$\alpha$-olefin random copolymer is produced in at least two reactors connected in series. Accordingly such a polymerization system comprises at least a first polymerization reactor (R1) and a second polymerization reactor (R2), and optionally a third polymerization reactor (R3).

The first, respectively the single, polymerization reactor (R1) is preferably a slurry reactor and can be any continuous or simple stirred batch tank reactor or loop reactor operating in bulk or slurry. Bulk means a polymerization in a reaction medium that comprises of at least 60 % (w/w) monomer. According to the present invention the slurry reactor is preferably a (bulk) loop reactor.

In case a "sequential polymerization process" is applied the second polymerization reactor (R2) and the optional third polymerization reactor (R3) are gas phase reactors (GPRs), i.e. a first gas phase reactor (GPR1) and a second gas phase reactor (GPR2). A gas phase reactor (GPR) according to this invention is preferably a fluidized bed reactor, a fast fluidized bed reactor or a settled bed reactor or any combination thereof.

A preferred multistage process is a "loop-gas phase"-process, such as developed by Borealis (known as BORSTAR® technology) described e.g. in patent literature, such as in EP 0 887 379, WO 92/12182, WO 2004/000899, WO 2004/111095, WO 99/24478, WO 99/24479 or in WO 00/68315.

A further suitable slurry-gas phase process is the Spheripol® process of Basell.

The propylene-$C_4$-$C_{12}$-$\alpha$-olefin random copolymer can be unimodal or multimodal, like bimodal, in view of comonomer content and/or $MFR_2$.

If the propylene-$C_4$-$C_{12}$-$\alpha$-olefin random copolymer is unimodal, it is preferably produced in a single polymerization step in one polymerization reactor (R1). Alternatively a unimodal propylene-$C_4$-$C_{12}$-$\alpha$-olefin random copolymer can be produced in a sequential polymerization process using the same polymerization conditions in all reactors.

If the propylene-$C_4$-$C_{12}$-$\alpha$-olefin random copolymer is multimodal, it is preferably produced in a sequential polymerization process using different polymerization conditions (amount of comonomer, hydrogen amount, etc.) in the reactors.

Preferably the propylene-$C_4$-$C_{12}$-$\alpha$-olefin random copolymer used according to the present invention is bimodal, especially in view of MFR and/or comonomer content, e.g. 1-hexene content.

In this case, the propylene-$C_4$-$C_{12}$-$\alpha$-olefin random copolymer, comprises two polymer fractions (R-PP1) and (R-PP2).

Preferably, the propylene-$C_4$-$C_{12}$-$\alpha$-olefin random copolymer consists of

25.0 to 50.0 wt.-%, preferably 30.0 to 48.0 wt.-%, more preferably 35.0 to 45.0 wt.-% of polymer fraction (R-PP1) having

(i) a $C_4$-$C_{12}$-$\alpha$-olefin content in the range of from 0.5 to 5.0 wt.-%, preferably 0.8 to 4.0 wt.-%, more preferably 1.0 to 3.0 wt.-% and
(ii) a melt flow rate $MFR_2$ (230°C/2.16kg) measured according to ISO 1133 in the range of from 2.0 to 10.0 g/10min, preferably from 3.0 to 9.0 g/10min, and

50.0 to 75.0 wt.-%, preferably 52.0 to 70.0 wt.-%, more preferably 55.0 to 65.0 wt.-% of polymer fraction (R-PP2) having

(i) a $C_4$-$C_{12}$-$\alpha$-olefin content in the range of from 3.2 to 10.0 wt.-%, preferably in the range of from 3.4 to 8.0 wt.-%, more preferably in the range of from 3.6 to 7.5 wt.-%, and
(ii) a melt flow rate $MFR_2$ (230°C/2.16kg) measured according to ISO 1133 in the range of from 1.0 to 20.0 g/10min, preferably from 3.0 to 15.0 g/10min, more preferably 5.0 to 10.0 g/10 min

whereby the $C_4$-$C_{12}$-$\alpha$-olefin content of polymer fraction (R-PP2) is higher than the $C_4$-$C_{12}$-$\alpha$-olefin content of polymer fraction (R-PP1).

It is preferred, that both fractions have the same comonomer type.

Fraction (R-PP1) may be further characterized by an amount of xylene cold soluble (XCS) in the range of 0.3 to 3.0 wt.-%, preferably 0.4 to 2.5 wt.-% and more preferably 0.5 to 2.0 wt.-%, and Fraction (R-PP2) may be further characterized by an amount of xylene cold soluble (XCS) in the range of 0.3 to 3.0 wt.-%, preferably 0.4 to 2.5 wt.-% and more preferably 0.5 to 2.0 wt.-%.

The propylene-$C_4$-$C_{12}$-$\alpha$-olefin random copolymer as defined in the instant invention may contain up to 5.0 wt.-% additives, like $\alpha$-nucleating agents and antioxidants, as well as slip agents and antiblocking agents. Preferably the additive content (without $\alpha$-nucleating agents) is below 3.0 wt.-%, like below 1.0 wt.-%. Typically, the additive content (without $\alpha$-nucleating agents) is at least 0.1 wt.-%.

**Applications**

The present invention is directed to a sheet comprising the above described propylene-$C_4$-$C_{12}$-$\alpha$-olefin random copolymer.

It has been found, that such sheets according to the present invention show an optimized or improved balance between optical properties, stiffness and toughness, i.e. dart drop impact.

Sheets comprising the propylene-$C_4$-$C_{12}$-$\alpha$-olefin random copolymer as described above shall preferably have a tensile modulus in machine and transverse direction determined on 300 $\mu$m sheets (respectively 300 $\mu$m cast films) in a range of 350 to 800 MPa, more preferably in a range of 380 to 750 MPa, and even more preferably in a range of 400 to 720 MPa, like in the range of 450 to 700 MPa.

Furthermore, such sheets comprising the propylene-$C_4$-$C_{12}$-$\alpha$-olefin random copolymer as described above shall preferably have a haze determined on 300 $\mu$m sheets (respectively 300 $\mu$m cast films) in a range of from 0.01 to below 10.0%, preferably in a range of from 0.05 to below 7.5%, more preferably in a range of from 0.10 to below 5.0% and even more preferably in a range of from 0.20 to below 2.0%.

The clarity as determined on 300 $\mu$m sheets (respectively 300 $\mu$m cast films), of the sheets of the invention shall preferably be in the range of from 80.0 up to 100.0%, preferably from 85.0 up to 100.0%, more preferably from 90.0 up to 100.0% and even more preferably from 95.0 to 100.0%.

The sheets according to the invention additionally may have a dart-drop impact strength (DDI) determined

according to ASTM D1709, method A on 300 μm sheets (respectively 300 μm cast films) of at least 1500 g up to more than 1700 g, preferably in the range of 1600 g up to more than 1700 g. The upper limit of more than 1700 g is due to the upper detection limit of 1700 g of the respective method.

In a preferred embodiment, the sheet according to the invention shows at least 2 of the above properties, more preferably at least 3 properties and most preferred all of the 4 above described properties, i.e. haze, clarity, tensile modulus and DDI.

The sheets according to the invention have a thickness of 100 up to 1000 μm, preferably 200 to 800 μm and more preferably 250 to 500 μm.

The sheets according to the invention comprise at least 90.0 wt.-%, preferably at least 95.0 wt.-%, more preferably at least 99.0 wt.-%, of the propylene-$C_4$-$C_{12}$-α-olefin random copolymer.

The sheets according to the invention are especially suitable for thermoforming, therefore the present invention is also related to the use of the sheets for producing thermoformed articles, and thermoformed articles made from the sheet according to the invention.

A "thermoformed article," as used herein, is a thermoplastic sheet heated at least to its softening point and fitted along the contours of a mold with pressure (positive and/or negative). The thermoformed article then is removed from the mold after cooling below its softening point. Non-limiting examples of thermoformed articles include trays, containers, and cups.

The sheets according to the invention may be prepared by known technologies for producing sheets for thermoforming. Examples are the cast film technology or the roll-stack technology.

*Cast film technology*

In this most simple technology for producing polymer films, respectively sheets, the molten polymer is extruded through a slot die fed by a (normally single-screw) extruder onto a first cooled roll, the so-called chill-roll. From this roll, the already solidified film is taken up by a second roll (nip roll or takeup roll) and transported to a winding device after trimming the edges.

Only a very limited amount of orientation is created in the film, which is determined by the ratio between die thickness and film thickness or the extrusion speed and the take-up speed, respectively. Due to its technical simplicity, cast film technology is a very economical and easy-to-handle process.

*Roll-stack technology*

The production of extruded sheets for thermoforming is normally performed using a three roll roll-stack, where the thickness range is typically from around 0.3 mm up to about 2 mm. The roll-stack comprises three rotating, hardened and highly polished rolls (typical diameters 300 - 600 mm), preferably with independent temperature control and drives.

The purpose of the roll-stack is to convert a polymer melt exiting a flat die into a solid polished sheet, with uniform and controlled morphology, which can subsequently be handled. The roll-stack is most commonly in a vertical configuration, although other configurations are also used, and the sheet can pass either down or up the roll-stack. The current description is for vertical down-stack operation.

In the case of polypropylene, the molten polymer (typically at 210-240 °C) passes directly from the die into the gap between the rotating top and middle rolls, where the gap is similar (+/-10 %) to the die opening. The extruder output is adjusted such that a small and constant rolling bank of material is established between one of the rolls (preferably the upper roll) and one of the surfaces of the polymer melt. The extruder output and roll speed are adjusted to minimise any stretching and machine direction orientation of the polymer melt. The polymer passes over the middle roll into the gap between the middle and bottom rolls. The temperature of the middle roll is adjusted such that the polymer remains in good contact with the roll and the upper (outer) surface of the sheet is at an appropriate temperature for the pressure between the middle and bottom rolls to provide a highly polished surface. Further cooling takes place on the bottom roll and the sheet exits the roll-stack for subsequent operations - normally winding or direct in-line thermoforming.

The roll temperatures are particularly critical factors for obtaining good quality polypropylene sheet for thermoforming.

The optimum temperatures depend on several factors, which include the roll diameters, line speed, sheet thickness and the type of polypropylene being processed. Depending on these factors the temperatures of the rolls typically fall into the ranges:

Top Roll 20 - 50 °C
Middle Roll 20 - 80 °C
Bottom Roll 30 - 90 °C

The top roll temperature is normally less than that of the middle roll and the middle and bottom rolls normally have a similar temperature. Orientation and anisotropy of the mechanical properties of flat films produced by roll stack technology are low.

**Experimental Part:**

1. **Methods**

**The xylene soluble fraction at room temperature (XCS, wt.-%):** The amount of the polymer soluble in xylene is determined at 25°C according to ISO 16152; 2005.

*Calculation of XCS and comonomer content of the second polymer fraction (R-PP2):*

While comonomer content and XCS of the first polymer fraction (R-PP1) of the propylene-hexene random copolymer (A) can be determined directly on samples taken after the first polymerization step, said values have to be calculated for the second polymer fraction (R-PP2). A simple mixing rule is used for this purpose, giving the formulas

$$XCS(R-PP2) = \frac{100\ x\ XCS(A) - w(R-PP1)\ x\ XCS(R-PP1)}{w(R-PP2)}$$

and

$$C6(R-PP2) = \frac{100\ x\ C6(A) - w(R-PP1)\ x\ C6(R-PP1)}{w(R-PP2)}$$

wherein

w(R-PP1) is the weight fraction [in wt.-%] of the polymer fraction R-PP1
w(R-PP2) is the weight fraction [in wt.-%] of the polymer fraction R-PP2,
XCS(R-PP1) is the XCS content [in wt.-%] of the polymer fraction R-PP1,
XCS(A) is the XCS content [in wt.-%] of the propylene-hexene random copolymer,
XCS(R-PP2) is the calculated XCS content [in wt.-%] of the polymer fraction R-PP2,
C6(R-PP1) is the 1-hexene content [in wt.-%] of the polymer fraction R-PP1,
C6(A) is the 1-hexene content [in wt.-%] of the propylene-hexene random copolymer,
C6(R-PP2) is the calculated 1-hexene content [in wt.-%] of the polymer fraction R-PP2.

**$MFR_2$(230°C)** is measured according to ISO 1133 (230°C, 2.16 kg load)

The melt flow rate is measured as the $MFR_2$ in accordance with ISO 1133 15 (230°C, 2.16 kg load) for polypropylene. The MFR is an indication of the flowability, and hence the processability of the polymer. The higher the melt flow rate, the lower the viscosity of the polymer.

*Calculation of melt flow rate $MFR_2$ (230°C) of the polymer fraction (R-PP2):*

$$MFR(R-PP2) = 10^{\left[\frac{\log(MFR(A)) - w(R-PP1)\ x\ \log(MFR(R-PP1))}{w(R-PP2)}\right]}$$

wherein

w(R-PP1) is the weight fraction [in wt.-%] of the polymer fraction R-PP1
w(R-PP2) is the weight fraction [in wt.-%] of the polymer fraction R-PP2,
MFR(R-PP1) is the melt flow rate $MFR_2$ (230°C) [g/10min] of the polymer fraction R-PP1,
MFR(A) is the melt flow rate $MFR_2$ (230°C) [g/10min] of the propylene-hexene random copolymer,
MFR(R-PP2) is the calculated melt flow rate $MFR_2$ (230°C) [g/10min] of the polymer fraction R-PP2.

**Comonomer determination: 1-hexene content - $^{13}C$ NMR spectroscopy**

Quantitative $^{13}C\{^1H\}$ NMR spectra recorded in the molten-state using a Bruker Avance III 500 NMR spectrometer operating at 500.13 and 125.76 MHz for $^1H$ and $^{13}C$ respectively. All spectra were recorded using a $^{13}C$ optimised 7 mm magic-angle spinning (MAS) probehead at 180°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification.(Klimke, K., Parkinson, M., Piel, C., Kaminsky, W., Spiess, H.W., Wilhelm, M., Macromol. Chem. Phys. 2006;207:382., Parkinson, M., Klimke, K., Spiess, H.W., Wilhelm, M., Macromol. Chem. Phys. 2007;208:2128., Castignolles, P., Graf, R., Parkinson, M., Wilhelm, M., Gaborieau, M., Polymer 50 (2009) 2373). Standard single-pulse excitation was employed utilising the NOE at short recycle delays of 3s (Klimke, K., Parkinson, M., Piel, C., Kaminsky, W., Spiess, H.W., Wilhelm, M., Macromol. Chem. Phys. 2006;207:382., Pollard, M., Klimke, K., Graf, R., Spiess, H.W., Wilhelm, M., Sperber, O., Piel, C., Kaminsky, W., Macromolecules 2004;37:813.). and the RS-HEPT decoupling scheme (Filip, X., Tripon, C., Filip, C., J. Mag. Resn. 2005, 176, 239., Griffin, J.M., Tripon, C., Samoson, A., Filip, C., and Brown, S.P., Mag. Res. in Chem. 2007 45, S1, S198). A total of 16384 (16k) transients were acquired per spectra.

Quantitative $^{13}C\{^1H\}$ NMR spectra were processed, integrated and relevant quantitative properties determined from the integrals. All chemical shifts are internally referenced to the methyl isotactic pentad (*mmmm*) at 21.85 ppm.

Characteristic signals corresponding to the incorporation of 1-hexene were observed and the comonomer content quantified in the following way.

The amount of 1-hexene incorporated in PHP isolated sequences was quantified using the integral of the αB4 sites at 44.2 ppm accounting for the number of reporting sites per comonomer:

$$H = I\alpha B4 / 2$$

The amount of 1-hexene incorporated in PHHP double consecutive sequences was quantified using the integral of the ααB4 site at 41.7 ppm accounting for the number of reporting sites per comonomer:

$$HH = 2 * I\alpha\alpha B4$$

When double consecutive incorporation was observed the amount of 1-hexene incorporated in PHP isolated sequences needed to be compensated due to the overlap of the signals □B4 and αB4B4 at 44.4 ppm:

$$H = (I\alpha B4 - 2 * I\alpha\alpha B4) / 2$$

The total 1-hexene content was calculated based on the sum of isolated and consecutively incorporated 1-hexene:

$$Htotal = H + HH$$

When no sites indicative of consecutive incorporation observed the total 1-hexen comonomer content was calculated solely on this quantity:

$$Htotal = H$$

Characteristic signals indicative of regio 2,1-erythro defects were observed ( Resconi, L., Cavallo, L., Fait, A., Piemontesi, F., Chem. Rev. 2000, 100, 1253).

The presence of 2,1-erythro regio defects was indicated by the presence of the Pαβ (21e8) and Pαγ (21e6) methyl sites at 17.7 and 17.2 ppm and confirmed by other characteristic signals.

The total amount of secondary (2, 1-erythro) inserted propene was quantified based on the αα21e9 methylene site at 42.4 ppm:

$$P21 = I\alpha\alpha 21e9$$

The total amount of primary (1,2) inserted propene was quantified based on the main $S\alpha\alpha$ methylene sites at 46.7 ppm and compensating for the relative amount of 2,1-erythro, $\alpha$B4 and $\alpha\alpha$B4B4 methylene unit of propene not accounted for (note H and HH count number of hexene monomers per sequence not the number of sequences):

$$P12 = I_S\alpha\alpha + 2*P21 + H + HH / 2$$

The total amount of propene was quantified as the sum of primary (1,2) and secondary (2,1-erythro) inserted propene:

$$Ptotal = P12 + P21 = I_S\alpha\alpha + 3* I\alpha\alpha21e9 + (I\alpha B4 - 2 * I\alpha\alpha B4) / 2 + I\alpha\alpha B4$$

This simplifies to:

$$Ptotal = I_S\alpha\alpha + 3* I\alpha\alpha21e9 + 0.5*I\alpha B4$$

The total mole fraction of 1-hexene in the polymer was then calculated as:

$$fH = Htotal / ( Htotal + Ptotal)$$

The full integral equation for the mole fraction of 1-hexene in the polymer was:

$$fH = (((I\alpha B4 - 2 * I\alpha\alpha B4) / 2) + (2 * I\alpha\alpha B4)) /((I_S\alpha\alpha+ 3* I\alpha\alpha21e9 + 0.5*I\alpha B4) + ((I\alpha B4 - 2 * I\alpha\alpha B4) / 2) + (2 * I\alpha\alpha B4))$$

This simplifies to:

$$fH = (I\alpha B4/2 + I\alpha\alpha B4) / (I_S\alpha\alpha + 3* I\alpha\alpha21e9 + I\alpha B4 + I\alpha\alpha B4)$$

The total comonomer incorporation of 1-hexene in mole percent was calculated from the mole fraction in the usual manner:

$$H [mol\%] = 100 * fH$$

The total comonomer incorporation of 1-hexene in weight percent was calculated from the mole fraction in the standard manner:

$$H [wt\%] = 100 * ( fH * 84.16) / ( (fH * 84.16) + ((1 - fH) * 42.08) )$$

**DSC analysis, melting temperature (Tm) and crystallization temperature (Tc):**
measured with a TA Instrument Q2000 differential scanning calorimetry (DSC) on 5 to 7 mg samples. DSC is run according to ISO 11357 / part 3 /method C2 in a heat / cool /heat cycle with a scan rate of 10°C/min in the temperature range of -30°C to +225°C.

Crystallization temperature and heat of crystallization (Hc) are determined from the cooling step, while melting temperature and heat of fusion (Hf) are determined from the second heating step.

**GPC: Molecular weight averages, molecular weight distribution, and polydispersity index (Mn, Mw, Mw/Mn)**

Molecular weight averages (Mw and Mn), Molecular weight distribution (MWD) and its broadness, described by polydispersity Mw/Mn (wherein Mn is the number average molecular weight and Mw is the weight average molecular weight) were determined by Gel Permeation Chromatography (GPC) according to ISO 16014-1:2003, ISO 16014-2:2003,

ISO 16014-4:2003 and ASTM D 6474-12. A high temperature GPC instrument, equipped with either infrared (IR) detector (IR4 or IR5 from PolymerChar (Valencia, Spain) or differential refractometer (RI) from Agilent Technologies, equipped with 3 x Agilent-PLgel Olexis and 1x Agilent-PLgel Olexis Guard columns was used. As the solvent and mobile phase 1,2,4-trichlorobenzene (TCB) stabilized with 250 mg/L 2,6-Di tert butyl-4-methyl-phenol) was used. The chromatographic system was operated at 160°C and at a constant flow rate of 1 mL/min. 200 μL of sample solution was injected per analysis. Data collection was performed using either Agilent Cirrus software version 3.3 or PolymerChar GPC-IR control software.

**Haze and Clarity** were determined according to ASTM D1003-00 on cast films of 300 μm thickness produced on a monolayer cast film line with a melt temperature of 220°C and a chill roll temperature of 20°C.

### Tensile modulus

Tensile modulus in machine and transverse direction were determined according to ISO 527-3 at 23°C on the cast films of 300 μm as produced indicated below. Testing was performed at a cross head speed of 1 mm/min.

### Dart drop strength (DDI)

Dart-drop was measured using ASTM D1709, method A (Alternative Testing Technique) from the cast films of 300 μm as produced indicated below. A dart with a 38 mm diameter hemispherical head is dropped from a height of 0.66 m onto a film clamped over a hole. Successive sets of twenty specimens are tested. One weight is used for each set and the weight is increased (or decreased) from set to set by uniform increments. The weight resulting in failure of 50 % of the specimens is calculated and reported.

The 300 μm sheets were produced on a Collin cast film line equipped with a pilot-scale extruder of 30 mm diameter and a LID ratio of 30, running with a multi-purpose screw suitable for PP and PE processing and with a maximal throughput capacity of 15 kg/h. The attached cast film die has a width of 300 mm and a die gap of 0.5 mm to 1 mm and is equipped with an air knife. Both the cooling roll (commonly called chill-roll) and the secondary roll have a width of 350 mm and a diameter of 144 mm, followed by a conventional winder. The die gap was set to 1.0 mm using draw-down to a final 300 μm thick film, setting both cooling roll and secondary roll to 20°C.

## 2. Examples

### Propylene-1-hexene random copolymer preparation

### Catalyst: Synthesis of metallocene

The metallocene complex (Metallocene MC-2) has been produced as described in WO2019/179959 for MC-2.

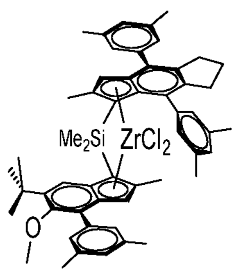

*Preparation of MAO-silica support*

A steel reactor equipped with a mechanical stirrer and a filter net was flushed with nitrogen and the reactor temperature was set to 20°C. Next silica grade DM-L-303 from AGC Si-Tech Co, pre-calcined at 600°C (5.0 kg) was added from a feeding drum followed by careful pressuring and depressurising with nitrogen using manual valves. Then toluene (22 kg) was added. The mixture was stirred for 15 min. Next 30 wt.-% solution of MAO in toluene (9.0 kg) from Lanxess was added via feed line on the top of the reactor within 70 min. The reaction mixture was then heated up to 90°C and stirred at 90°C for additional two hours. The slurry was allowed to settle and the mother liquor was filtered off. The catalyst was washed twice with toluene (22 kg) at 90°C, following by settling and filtration. The reactor was cooled off to 60°C and the solid was washed with heptane (22.2 kg). Finally MAO treated SiO2 was dried at 60° under nitrogen flow for 2 hours and then for 5 hours under vacuum (-0.5 barg) with stirring. MAO treated support was collected as a

free-flowing white powder found to contain 12.2% Al by weight.

*Inventive Catalyst System 1(ICS1) Catalyst preparation*

30 wt.-% MAO in toluene (0.7 kg) was added into a steel nitrogen blanked reactor via a burette at 20 °C. Toluene (5.4 kg) was then added under stirring. Metallocene MC-2 (93 g) was added from a metal cylinder followed by flushing with 1 kg toluene. The mixture was stirred for 60 minutes at 20°C. Trityl tetrakis(pentafluorophenyl) borate (91 g) was then added from a metal cylinder followed by a flush with 1 kg of toluene. The mixture was stirred for 1 h at room temperature. The resulting silution was added to a a stirred cake of MAO-silica support prepared as described above over 1 hour. The cake was allowed to stay for 12 hours, folled by drying under N2 flow at 60°C for 2h and additionaly for 5 h under vacuum (-0.5 barg) under stirring stirring.

Dried catalyst was sampled in the form of pink free flowing powder containing 13.9% Al and 0.11% Zr.

The propylene-1-hexene random copolymer was produced in a Borstar® pilot plant with a prepolymerization reactor and one slurry loop reactor.

**Table 1:** propylene-1-hexene random copolymer (PHC)

| | | PHC-1 | PHC-2 |
|---|---|---|---|
| ***Prepolymerization*** | | | |
| Temperature | °C | 25 | 25 |
| Pressure | kPa | 5111 | 5123 |
| Catalyst feed | g/h | 8.5 | 6.0 |
| $H_2$ feed | g/h | 0.10 | 0.10 |
| ***Loop (Reactor 1)*** | | | |
| Temperature | °C | 65 | 65 |
| Pressure | kPa | 5056 | 5061 |
| $H_2/C_3$ ratio | mol/kmol | 0.08 | 0.08 |
| $C_6/C_3$ ratio | mol/kmol | 45.9 | 44.4 |
| Liquid residence time | H | 0.37 | 0.37 |
| Loop reactor split | wt.-% | 43 | 39 |
| $MFR_2$loop fraction* | g/10 min | 5.3 | 6.6 |
| $C_6$ content loop fraction* | wt.-% | 1.3 | 1.2 |
| XCS loop fraction* | wt.-% | 1.4 | 1.3 |
| ***GPR (Reactor 2)*** | | | |
| Temperature | °C | 80 | 80 |
| Pressure | kPa | 2400 | 2400 |
| $H_2/C_3$ ratio | mol/kmol | 1.1 | 1.2 |
| $C_6/C_3$ ratio | mol/kmol | 6.6 | 5.1 |
| Polymer residence time | H | 2.7 | 3.6 |
| GPR reactor split | wt.-% | 57 | 61 |
| $C_6$ content GPR fraction** | wt.-% | 5.5 | 3.7 |
| MFR of GPR fraction** | g/10min | 8.6 | 8.0 |
| XCS of GPR fraction** | wt.-% | 1.2 | 0.7 |
| ***Polymer properties*** | | | |
| XCS | wt.-% | 1.3 | 0.9 |
| $MFR_2$ | g/10min | 7.0 | 6.6 |

(continued)

| *Polymer properties* | | | |
|---|---|---|---|
| $C_6$ content | wt.-% | 3.7 | 2.7 |
| Mw/Mn (GPC) | - | 2.9 | 2.9 |
| Tm | °C | 140 | 137 |
| Tc | °C | 96 | 101 |
| * *R-PP1*, ** *R-PP2* | | | |

**Composition:**

The propylene-1-hexene random copolymers PHC-1 and PHC-2 were compounded in a corotating twin-screw extruder Coperion TSE 16 at 220°C with 0.15 wt.-% antioxidant (Irganox B215FF from BASF AG, Germany; this is a 1:2-mixture of Pentaerythrityl-tetrakis(3-(3',5'-di-tert. butyl-4-hydroxyphenyl)-propionate, CAS-no. 6683-19-8, and Tris (2,4-di-t-butylphenyl) phosphite, CAS-no. 31570-04-4); 0.05 wt.-% of of Ca-stearate (CAS-no.1592-23-0, commercially available from Faci, Italy) .

As Comparative Example CE1 a polypropylene homopolymer, HD601CF, commercially available from Borealis was used. The polymer is based on a conventional 4th generation Ziegler-Natta type catalyst, has an XCS content of 3.6 wt% and a polydispersity Mw/Mn of 5.0 as well as a melting point Tm (DSC) of 165°C and an $MFR_2$ of 8.0 g/10 min. As Comparative Example CE2 a propylene-ethylene random copolymer, RD204CF, commercially available from Borealis was used. The polymer is a visbroken grade with an ethylene content of 2.2 wt.-%, based on a conventional 4th generation Ziegler-Natta type catalyst, has an XCS content of 4.0 wt% and a polydispersity Mw/Mn of 3.2 as well as as well as a melting point Tm (DSC) of 153°C and an $MFR_2$ of 8.0 g/10 min.

**Table 2** - Inventive and comparative Examples

| | | IE1 | IE2 | CE1 | CE2 |
|---|---|---|---|---|---|
| Component | | PHC-1 | PHC-2 | HD601CF | RD204CF |
| Cast film (300 μm) | | | | | |
| Tensile modulus (machine direction) | MPa | 571 | 645 | 751 | 604 |
| DDI | 9 | >1700 | >1700 | 1110 | 1450 |
| Haze | % | 1.16 | 0.55 | 30 | 11.5 |
| Clarity | % | 97.8 | 98.8 | 62.6 | 77.5 |

From the above table it can be clearly seen that sheets according to the invention are characterised by an advantageous combination of excellent optical properties, high tensile modulus and high impact strength (DDI).

## Claims

**1.** A polypropylene sheet comprising

at least 90.0 wt.-% of a metallocene catalysed propylene-$C_4$-$C_{12}$-α-olefin random copolymer with

a-1) a $C_4$-$C_{12}$-α-olefin content in the range of from 1.0 to 6.0 wt.-%, based on the total weight of the propylene-$C_4$-$C_{12}$-α-olefin random copolymer,
a-2) an $MFR_2$ (230°C, 2.16kg, ISO 1133) in a range of from 2.0 to 20.0 g/10 min,
a-3) a melting temperature Tm (DSC) in the range of from 125°C to 150°C, and
a-4) a xylene cold soluble (XCS) amount in the range of 0.3 to 2.5 wt.-% (measured according to ISO 16152, 2005, at 25°C) and

wherein the sheet has a thickness of 100 to 1000 μm.

**2.** The polypropylene sheet according to claim 1, wherein the comonomer of the propylene- $C_4$-$C_{12}$-$\alpha$-olefin random copolymer is selected from the group of $C_4$-$C_{12}$-$\alpha$-olefins, preferably from $C_4$-$C_{10}$-$\alpha$-olefins, more preferably from $C_4$-$C_8$-$\alpha$-olefins, especially from the group consisting of 1-butene (C4) and 1-hexene (C6), even more preferably the comonomer is 1-hexene.

**3.** The polypropylene sheet according to any one of the preceding claims, wherein the propylene- $C_4$-$C_{12}$-$\alpha$-olefin random copolymer has

an $C_4$-$C_{12}$-$\alpha$-olefin content in the range of from 1.5 to 5.0 wt.-%, preferably in the range of from 1.8 to 4.5 wt.-%, more preferably in the range of from 2.0 to 4.2 wt.-%, and even more preferably in the range of from 2.4 to 4.0 wt.-% and/or
an $MFR_2$ (230°C, 2.16kg, ISO 1133) in the range of from 1.5 to 15.0 g/10 min, preferably in the range of from 2.0 to 12.0 g/10 min, more preferably in the range of from 3.0 to 10.0 g/10 min and even more preferably in the range of from 4.0 to 8.0 g/10 min and/or
a melting temperature Tm in the range of from 128°C to 145°C, and preferably in the range of from 130°C to 143°C and /or
a xylene cold soluble (XCS) amount (measured according to ISO 16152, 2005, at 25°C) in the range of 0.4 to 2.0 wt.-%, preferably in the range of 0.5 to 1.8 wt.-%.

**4.** The polypropylene sheet according to any one of the preceding claims, wherein the propylene- $C_4$-$C_{12}$-$\alpha$-olefin random copolymer furthermore has a crystallization temperature in the range of from 90°C to 105°C, preferably 92°C to 103°C.

**5.** The polypropylene sheet according to any one of the preceding claims, wherein the propylene- $C_4$-$C_{12}$-$\alpha$-olefin random copolymer consists of

25.0 to 50.0 wt.-%, preferably 30.0 to 48.0 wt.-%, more preferably 35.0 to 45.0 wt.-% of polymer fraction (R-PP1) having

(i) a $C_4$-$C_{12}$-$\alpha$-olefin content in the range of from 0.5 to 5.0 wt.-%, preferably 0.8 to 4.0 wt.-%, more preferably 1.0 to 3.0 wt.-% and
(ii) a melt flow rate $MFR_2$ (230°C/2.16kg) measured according to ISO 1133 in the range of from 2.0 to 10.0 g/10min, preferably from 3.0 to 9.0 g/10min, and

50.0 to 75.0 wt.-%, preferably 52.0 to 70.0 wt.-%, more preferably 55.0 to 65.0 wt.-% of polymer fraction (R-PP2) having

(i) a $C_4$-$C_{12}$-$\alpha$-olefin content in the range of from 3.2 to 10.0 wt.-%, preferably in the range of from 3.4 to 8.0 wt.-%, more preferably in the range of from 3.6 to 7.5 wt.-%, and
(ii) a melt flow rate $MFR_2$ (230°C/2.16kg) measured according to ISO 1133 in the range of from 1.0 to 20.0 g/10min, preferably from 3.0 to 15.0 g/10min, more preferably 5.0 to 10.0 g/10 min,

whereby the $C_4$-$C_{12}$-$\alpha$-olefin content of polymer fraction (R-PP2) is higher than the $C_4$-$C_{12}$-$\alpha$-olefin content of polymer fraction (R-PP1).

**6.** The polypropylene sheet according to claim 5, wherein fraction (R-PP1) has an amount of xylene cold soluble (XCS) in the range of 0.3 to 3.0 wt.-%, preferably 0.4 to 2.5 wt.-% and more preferably 0.5 to 2.0 wt.-%, and fraction (R-PP2) has an amount of xylene cold soluble (XCS) in the range of 0.3 to 3.0 wt.-%, preferably 0.4 to 2.5 wt.-% and more preferably 0.5 to 2.0 wt.-%.

**7.** The polypropylene sheet according to any one of the preceding claims, wherein the propylene- $C_4$-$C_{12}$-$\alpha$-olefin random copolymer has a Mw/Mn value in the range of from 1.5 to 5.0, preferably in the range of from 2.0 to 4.5, and more preferably in the range of from 2.5 to 4.0.

**8.** The polypropylene sheet according to any one of claims 1 to 7, wherein the sheet comprises at least 95.0 wt.-%, preferably at least 99.0 wt.-% of the propylene-$C_4$-$C_{12}$-$\alpha$-olefin random copolymer according to any one of the preceding claims 1 to 7.

**9.** The polypropylene sheet according to any one of the preceding claims, wherein the sheet has a tensile modulus in machine and transverse direction determined according to ISO 527 at 23°C on 300 $\mu$m cast film in a range of 350 to 800 MPa, more preferably in a range of 380 to 750 MPa, even more preferably in a range of 400 to 720 MPa, like in the range of 450 to 700 MPa.

**10.** The polypropylene sheet according to any one of the preceding claims, wherein the sheet has a haze determined according to ASTM D1003-00 on 300 $\mu$m cast film in a range of from 0.01 to below 10.0%, preferably in a range of from 0.05 to below 7.5%, more preferably in a range of from 0.10 to below 5.0% and even more preferably in the range of from 0.20 to below 2.0%.

**11.** The polypropylene sheet according to any one of the preceding claims, wherein the sheet has a clarity determined according to ASTM D1003-00 on 300 $\mu$m cast film in a range of from 80.0 up to 100.0%, preferably in a range of from 85.0 up to 100.0%, more preferably in a range of from 90.0 up to 100.0% and even more preferably in the range of from 95.0 up to 100.0%.

**12.** The polypropylene sheet according to any one of the preceding claims, wherein the sheet has a dart-drop impact strength (DDI) determined according to ASTM D1709, method A on a 300 $\mu$m cast film of at least 1500 g up to more than 1700 g, preferably in the range of 1600 g up to more than 1700 g, whereby the upper limit of more than 1700 g is due to the upper detection limit of 1700 g of the method.

**13.** The polypropylene sheet according to any one of the preceding claims, wherein the sheet shows at least 2 of the properties selected from haze, clarity, tensile modulus and DDI as defined in claims 9 to 12, more preferably at least 3 properties and most preferred all of the 4 properties, i.e. haze, clarity, tensile modulus and DDI as defined in claims 9 to 12.

**14.** Use of the polypropylene sheet according to any one of the preceding claims for producing thermoformed articles.

**15.** Thermoformed articles made from the polypropylene sheets according to any of the preceding claims 1 to 13.

**Patentansprüche**

**1.** Eine Polypropylenfolie, bestehend aus

mindestens 90,0 Gew.-% eines metallocenkatalysierten statistischen Propylen-$C_4$-$C_{12}$-$\alpha$-Olefin-Copolymers mit

a-1) einem $C_4$-$C_{12}$-$\alpha$-Olefin-Gehalt im Bereich von 1,0 bis 6,0 Gew.-%, bezogen auf das Gesamtgewicht des statistischen Propylen-$C_4$-$C_{12}$-$\alpha$-Olefin-Copolymers,
a-2) einer $MFR_2$ (230°C, 2,16kg, ISO 1133) in einem Bereich von 2,0 bis 20,0 g/10min,
a-3) einer Schmelztemperatur Tm (DSC) im Bereich von 125°C bis 150°C und
a-4) einer in Xylol kalt löslichen (XCS) Menge im Bereich von 0,3 bis 2,5 Gew.-% (gemessen gemäß ISO 16152, 2005, bei 25°C) und

wobei die Folie eine Dicke von 100 bis 1000 $\mu$m aufweist.

**2.** Polypropylenfolie gemäß Anspruch 1, wobei das Comonomer des statistischen Propylen-$C_4$-$C_{12}$-$\alpha$-Olefin-Copolymers ausgewählt ist aus der Gruppe der $C_4$-$C_{12}$-$\alpha$-Olefine, vorzugsweise aus $C_4$-$C_{10}$-$\alpha$-Olefinen, noch bevorzugter aus $C_4$-$C_8$-$\alpha$-Olefinen, insbesondere aus der Gruppe bestehend aus 1-Buten (C4) und 1-Hexen (C6), noch bevorzugter ist das Comonomer 1-Hexen.

**3.** Polypropylenfolie gemäß einem der vorhergehenden Ansprüche, wobei das statistische Propylen-$C_4$-$C_{12}$-$\alpha$-Olefin-Copolymer Folgendes aufweist

einen Gehalt an $C_4$-$C_{12}$-$\alpha$-Olefinen im Bereich von 1,5 bis 5,0 Gew.-%, vorzugsweise im Bereich von 1,8 bis 4,5 Gew.-%, besonders bevorzugt im Bereich von 2,0 bis 4,2 Gew.-% und noch bevorzugter im Bereich von 2,4 bis 4,0 Gew.-% und/oder
eine $MFR_2$ (230°C, 2,16 kg, ISO 1133) im Bereich von 1,5 bis 15,0 g/10min, vorzugsweise im Bereich von 2,0 bis 12,0 g/10min, noch bevorzugter im Bereich von 3,0 bis 10,0 g/10min und noch bevorzugter im Bereich von

4,0 bis 8,0 g/10min und/oder
eine Schmelztemperatur Tm im Bereich von 128°C bis 145°C und vorzugsweise im Bereich von 130°C bis 143°C und/oder
eine in Xylol kalt lösliche (XCS) Menge (gemessen gemäß ISO 16152, 2005, bei 25°C) im Bereich von 0,4 bis 2,0 Gew.-%, vorzugsweise im Bereich von 0,5 bis 1,8 Gew.-%.

**4.** Polypropylenfolie gemäß einem der vorhergehenden Ansprüche, wobei das statistische Propylen-$C_4$-$C_{12}$-$\alpha$-Olefin-Copolymer außerdem eine Kristallisationstemperatur im Bereich von 90°C bis 105°C, vorzugsweise 92°C bis 103°C, aufweist.

**5.** Polypropylenfolie gemäß einem der vorhergehenden Ansprüche, wobei das statistische Propylen-$C_4$-$C_{12}$-$\alpha$-Olefin-Copolymer besteht aus

25,0 bis 50,0 Gew.-%, vorzugsweise 30,0 bis 48,0 Gew.-%, besonders bevorzugt 35,0 bis 45,0 Gew.-% der Polymerfraktion (R-PP1) mit

(i) einen $C_4$-$C_{12}$-$\alpha$-Olefin-Gehalt im Bereich von 0,5 bis 5,0 Gew.-%, vorzugsweise 0,8 bis 4,0 Gew.-%, besonders bevorzugt 1,0 bis 3,0 Gew.-% und
(ii) eine Schmelzflussrate $MFR_2$ (230°C/2,16kg), gemessen nach ISO 1133, im Bereich von 2,0 bis 10,0 g/10min, vorzugsweise von 3,0 bis 9,0 g/10min, und

50,0 bis 75,0 Gew.-%, vorzugsweise 52,0 bis 70,0 Gew.-%, besonders bevorzugt 55,0 bis 65,0 Gew.-% der Polymerfraktion (R-PP2) mit

(i) einen $C_4$-$C_{12}$-$\alpha$-Olefin-Gehalt im Bereich von 3,2 bis 10,0 Gew.-%, vorzugsweise im Bereich von 3,4 bis 8,0 Gew.-%, besonders bevorzugt im Bereich von 3,6 bis 7,5 Gew.-%, und
(ii) eine nach ISO 1133 gemessene Schmelzflussrate $MFR_2$ (230°C/2,16kg) im Bereich von 1,0 bis 20,0 g/10min, vorzugsweise von 3,0 bis 15,0 g/10min, besonders bevorzugt 5,0 bis 10,0 g/10min,

wobei der $C_4$-$C_{12}$-$\alpha$-Olefin-Gehalt der Polymerfraktion (R-PP2) höher ist als der $C_4$-$C_{12}$-$\alpha$-Olefin-Gehalt der Polymerfraktion (R-PP1).

**6.** Polypropylenfolie gemäß Anspruch 5, wobei die Fraktion (R-PP1) eine Menge an in Xylol kalt löslichem (XCS) im Bereich von 0,3 bis 3,0 Gew.-%, vorzugsweise 0,4 bis 2,5 Gew.% und noch bevorzugter 0,5 bis 2,0 Gew.-% aufweist, und die Fraktion (R-PP2) eine Menge an in Xylol kalt löslichem (XCS) im Bereich von 0,3 bis 3,0 Gew.-%, vorzugsweise 0,4 bis 2,5 Gew.-% und noch bevorzugter 0,5 bis 2,0 Gew.-% aufweist.

**7.** Polypropylenfolie gemäß einem der vorhergehenden Ansprüche, wobei das statistische Propylen-$C_4$-$C_{12}$-$\alpha$-Olefin-Copolymer einen Mw/Mn-Wert im Bereich von 1,5 bis 5,0, vorzugsweise im Bereich von 2,0 bis 4,5 und besonders bevorzugt im Bereich von 2,5 bis 4,0 aufweist.

**8.** Polypropylenfolie gemäß einem der Ansprüche 1 bis 7, wobei die Folie mindestens 95,0 Gew.-%, vorzugsweise mindestens 99,0 Gew.-%, des statistischen Propylen-$C_4$-$C_{12}$-$\alpha$-Olefin-Copolymers nach einem der vorhergehenden Ansprüche 1 bis 7 umfasst.

**9.** Polypropylenfolie gemäß einem der vorhergehenden Ansprüche, wobei die Folie einen Zugmodul in Maschinen- und Querrichtung, bestimmt nach ISO 527 bei 23°C an 300 $\mu$m Gießfolie, in einem Bereich von 350 bis 800 MPa, bevorzugter in einem Bereich von 380 bis 750 MPa, noch bevorzugter in einem Bereich von 400 bis 720 MPa, wie im Bereich von 450 bis 700 MPa aufweist.

**10.** Polypropylenfolie gemäß einem der vorhergehenden Ansprüche, wobei die Folie eine Trübung, bestimmt nach ASTM D1003-00 an 300 $\mu$m Gießfolie, in einem Bereich von 0,01 bis unter 10,0 %, vorzugsweise in einem Bereich von 0,05 bis unter 7,5 %, noch bevorzugter in einem Bereich von 0,10 bis unter 5,0 % und noch bevorzugter in einem Bereich von 0,20 bis unter 2,0 % aufweist.

**11.** Polypropylenfolie gemäß einem der vorhergehenden Ansprüche, wobei die Folie eine Klarheit, bestimmt nach ASTM D1003-00 an 300 $\mu$m Gießfolie, in einem Bereich von 80,0 bis 100,0 %, vorzugsweise in einem Bereich von 85,0 bis 100,0 %, noch bevorzugter in einem Bereich von 90,0 bis 100,0 % und noch bevorzugter in einem Bereich von

95,0 bis 100,0 % aufweist.

**12.** Polypropylenfolie gemäß einem der vorhergehenden Ansprüche, wobei die Folie eine Dart-Drop-Schlagzähigkeit (DDI), bestimmt nach ASTM D1709, Verfahren A an einer 300-μm-Gießfolie, von mindestens 1500 g bis zu mehr als 1700 g, vorzugsweise im Bereich von 1600 g bis zu mehr als 1700 g, aufweist, wobei die Obergrenze von mehr als 1700 g auf die obere Nachweisgrenze von 1700 g des Verfahrens zurückzuführen ist.

**13.** Polypropylenfolie gemäß einem der vorhergehenden Ansprüche, wobei die Folie mindestens 2 der Eigenschaften, ausgewählt aus Trübung, Klarheit, Zugmodul und DDI, wie in den Ansprüchen 9 bis 12 definiert, vorzugsweise mindestens 3 Eigenschaften und besonders bevorzugt alle 4 Eigenschaften, d.h. Trübung, Klarheit, Zugmodul und DDI, wie in den Ansprüchen 9 bis 12 definiert, aufweist.

**14.** Verwendung der Polypropylenfolie nach einem der vorhergehenden Ansprüche zur Herstellung von thermogeformten Artikeln.

**15.** Tiefgezogene Gegenstände aus Polypropylenplatten nach einem der vorhergehenden Ansprüche 1 bis 13.

**Revendications**

**1.** Feuille de polypropylène comprenant

au moins 90,0 % en poids d'un copolymère statistique de propylène-α-oléfine en $C_4$ à $C_{12}$ catalysé par métallocène présentant

a-1) une teneur en α-oléfine en $C_4$ à $C_{12}$ dans la plage de 1,0 à 6,0 % en poids, sur la base du poids total du copolymère statistique de propylène-α-oléfine en $C_4$ à C12,
a-2) an $MFR_2$ (230 °C, 2,16 kg, ISO 1133) dans une plage de 2,0 à 20,0 g/10 min,
a-3) une température de fusion Tm (DSC) dans la plage de 125 °C à 150 °C, et
a-4) une quantité soluble à froid dans le xylène (XCS) dans la plage de 0,3 à 2,5 % en poids (mesurée conformément à l'ISO 16152, 2005, à 25 °C) et

dans laquelle la feuille présente une épaisseur de 100 à 1000 μm.

**2.** Feuille de polypropylène selon la revendication 1, dans laquelle le comonomère du copolymère statistique de propylène-α-oléfine en $C_4$ à $C_{12}$ est sélectionné dans le groupe des α-oléfines en $C_4$ à $C_{12}$, de préférence parmi les α-oléfines en $C_4$ à $C_{10}$, de manière davantage préférée parmi les α-oléfines en $C_4$ à $C_8$, en particulier dans le groupe consistant en le 1-butène (C4) et le 1-hexène (C6), de manière encore plus préférée le comonomère est le 1-hexène.

**3.** Feuille de polypropylène selon l'une quelconque des revendications précédentes, dans laquelle le copolymère statistique de propylène-α-oléfine en $C_4$ à $C_{12}$ présente

une teneur en α-oléfine en $C_4$ à $C_{12}$ dans la plage de 1,5 à 5,0 % en poids, de préférence dans la plage de 1,8 à 4,5 % en poids, de manière davantage préférée dans la plage de 2,0 à 4,2 % en poids, et de manière encore plus préférée dans la plage de 2,4 à 4,0 % en poids et/ou
un $MFR_2$ (230 °C, 2,16 kg, ISO 1133) dans la plage de 1,5 à 15,0 g/10 min, de préférence dans la plage de 2,0 à 12,0 g/10 min, de manière davantage préférée dans la plage de 3,0 à 10,0 g/10 min et de manière encore plus préférée dans la plage de 4,0 à 8,0 g/10 min et/ou
une température de fusion Tm dans la plage de 128 °C à 145 °C, et de préférence dans la plage de 130 °C à 143 °C et/ou
une quantité soluble à froid dans le xylène (XCS) (mesurée conformément à l'ISO 16152, 2005, à 25 °C) dans la plage de 0,4 à 2,0 % en poids, de préférence dans la plage de 0,5 à 1,8 % en poids.

**4.** Feuille de polypropylène selon l'une quelconque des revendications précédentes, dans laquelle le copolymère statistique de propylène-α-oléfine en $C_4$ à $C_{12}$ présente en outre une température de cristallisation dans la plage de 90 °C à 105 °C, de préférence de 92 °C à 103 °C.

5. Feuille de polypropylène selon l'une quelconque des revendications précédentes, dans laquelle le copolymère statistique de propylène-α-oléfine en $C_4$ à $C_{12}$ est constitué

de 25,0 à 50,0 % en poids, de préférence de 30,0 à 48,0 % en poids, de manière davantage préférée de 35,0 à 45,0 % en poids d'une fraction de polymère (R-PP1) présentant

(i) une teneur en α-oléfine en $C_4$ à $C_{12}$ dans la plage de 0,5 à 5,0 % en poids, de préférence de 0,8 à 4,0 % en poids, de manière davantage préférée de 1,0 à 3,0 % en poids et
(ii) un indice de fluidité à l'état fondu MFR2 (230 °C/2,16 kg) mesuré conformément à l'ISO 1133 dans la plage de 2,0 à 10,0 g/10 min, de préférence de 3,0 à 9,0 g/10 min, et

de 50,0 à 75,0 % en poids, de préférence de 52,0 à 70,0 % en poids, de manière davantage préférée de 55,0 à 65,0 % en poids d'une fraction de polymère (R-PP2) présentant

(i) une teneur en α-oléfine en $C_4$ à $C_{12}$ dans la plage de 3,2 à 10,0 % en poids, de préférence dans la plage de 3,4 à 8,0 % en poids, de manière davantage préférée dans la plage de 3,6 à 7,5 % en poids, et
(ii) un indice de fluidité à l'état fondu MFR2 (230 °C/2,16 kg) mesuré conformément à l'ISO 1133 dans la plage de 1,0 à 20,0 g/10 min, de préférence de 3,0 à 15,0 g/10 min, de manière davantage préférée de 5,0 à 10,0 g/10 min,

moyennant quoi la teneur en α-oléfine en $C_4$ à $C_{12}$ de la fraction de polymère (R-PP2) est supérieure à la teneur en α-oléfine en $C_4$ à $C_{12}$ de la fraction de polymère (R-PP1).

6. Feuille de polypropylène selon la revendication 5, dans laquelle la fraction (R-PP1) présente une quantité soluble à froid dans le xylène (XCS) dans la plage de 0,3 à 3,0 % en poids, de préférence de 0,4 à 2,5 % en poids et de manière davantage préférée de 0,5 à 2,0 % en poids, et la fraction (R-PP2) présente une quantité soluble à froid dans le xylène (XCS) dans la plage de 0,3 à 3,0 % en poids, de préférence de 0,4 à 2,5 % en poids et de manière davantage préférée de 0,5 à 2,0 % en poids.

7. Feuille de polypropylène selon l'une quelconque des revendications précédentes, dans laquelle le copolymère statistique de propylène-α-oléfine en $C_4$ à $C_{12}$ présente une valeur Mw/Mn dans la plage de 1,5 à 5,0, de préférence dans la plage de 2,0 à 4,5, et de manière davantage préférée dans la plage de 2,5 à 4,0.

8. Feuille de polypropylène selon l'une quelconque des revendications 1 à 7, dans laquelle la feuille comprend au moins 95,0 % en poids, de préférence au moins 99,0 % en poids du copolymère statistique de propylène-α-oléfine en $C_4$ à $C_{12}$ selon l'une quelconque des revendications 1 à 7 précédentes.

9. Feuille de polypropylène selon l'une quelconque des revendications précédentes, dans laquelle la feuille présente un module de traction dans le sens machine et dans le sens transversal déterminé conformément à l'ISO 527 à 23 °C sur un film coulé de 300 μm dans une plage de 350 à 800 MPa, de manière davantage préférée dans une plage de 380 à 750 MPa, de manière encore plus préférée dans une plage de 400 à 720 MPa, comme dans la plage de 450 à 700 MPa.

10. Feuille de polypropylène selon l'une quelconque des revendications précédentes, dans laquelle la feuille présente un trouble déterminé conformément à l'ASTM D1003-00 sur un film coulé de 300 μm dans une plage de 0,01 à moins de 10,0 %, de préférence dans une plage de 0,05 à moins de 7,5 %, de manière davantage préférée dans une plage de 0,10 à moins de 5,0 % et de manière encore plus préférée dans la plage de 0,20 à moins de 2,0 %.

11. Feuille de polypropylène selon l'une quelconque des revendications précédentes, dans laquelle la feuille présente une clarté déterminée conformément à l'ASTM D1003-00 sur un film coulé de 300 μm dans une plage de 80,0 à 100,0 %, de préférence dans une plage de 85,0 à 100,0 %, de manière davantage préférée dans une plage de 90,0 jusqu'à 100,0 % et de manière encore plus préférée dans la plage de 95,0 jusqu'à 100,0 %.

12. Feuille de polypropylène selon l'une quelconque des revendications précédentes, dans laquelle la feuille présente une résistance aux chocs après chute de fléchette (DDI) déterminée conformément à l'ASTM D1709, méthode A sur un film coulé de 300 μm d'au moins 1500 g jusqu'à plus de 1700 g, de préférence dans la plage de 1600 g jusqu'à plus de 1700 g, moyennant quoi la limite supérieure de plus de 1700 g est due à la limite de détection supérieure de 1700 g de la méthode.

**13.** Feuille de polypropylène selon l'une quelconque des revendications précédentes, dans laquelle la feuille présente au moins 2 des propriétés sélectionnées parmi un trouble, une clarté, un module de traction et une DDI tels que définis dans les revendications 9 à 12, de manière davantage préférée au moins 3 propriétés et de manière préférée entre toutes les 4 propriétés, c'est-à-dire un trouble, une clarté, un module de traction et une DDI tels que définis dans les revendications 9 à 12.

**14.** Utilisation de la feuille de polypropylène selon l'une quelconque des revendications précédentes pour produire des articles thermoformés.

**15.** Articles thermoformés fabriqués à partir des feuilles de polypropylène selon l'une quelconque des revendications 1 à 13 précédentes.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2582732 A
- WO 2004055101 A
- EP 1801156 A
- EP 3456776 A
- WO 2019179959 A
- WO 2007116034 A
- WO 200202576 A
- WO 2011135004 A
- WO 2012084961 A
- WO 2012001052 A
- WO 2011076780 A
- WO 2015158790 A
- WO 2018122134 A
- WO 9414856 A
- WO 9512622 A
- WO 2006097497 A
- EP 0887379 A
- WO 9212182 A
- WO 2004000899 A
- WO 2004111095 A
- WO 9924478 A
- WO 9924479 A
- WO 0068315 A


### Non-patent literature cited in the description


- **KLIMKE, K. ; PARKINSON, M. ; PIEL, C. ; KAMINSKY, W. ; SPIESS, H.W. ; WILHELM, M.** *Macromol. Chem. Phys.,* 2006, vol. 207, 382
- **PARKINSON, M. ; KLIMKE, K. ; SPIESS, H.W. ; WILHELM, M.** *Macromol. Chem. Phys.,* 2007, vol. 208, 2128
- **CASTIGNOLLES, P. ; GRAF, R. ; PARKINSON, M. ; WILHELM, M. ; GABORIEAU, M.** *Polymer,* 2009, vol. 50, 2373
- **POLLARD, M. ; KLIMKE, K. ; GRAF, R. ; SPIESS, H.W. ; WILHELM, M. ; SPERBER, O. ; PIEL, C. ; KAMINSKY, W.** *Macromolecules,* 2004, vol. 37, 813
- **FILIP, X. ; TRIPON, C. ; FILIP, C.** *J. Mag. Resn.,* 2005, vol. 176, 239
- **GRIFFIN, J.M. ; TRIPON, C. ; SAMOSON, A. ; FILIP, C. ; BROWN, S.P.** *Mag. Res. in Chem.,* 2007, vol. 45 (S1), S198
- **RESCONI, L. ; CAVALLO, L. ; FAIT, A. ; PIEMONTESI, F.** *Chem. Rev.,* 2000, vol. 100, 1253
- *CHEMICAL ABSTRACTS,* 6683-19-8
- *CHEMICAL ABSTRACTS,* 31570-04-4
- *CHEMICAL ABSTRACTS,* 1592-23-0